# EUROPEAN PATENT SPECIFICATION

(11) **EP 3 549 197 B1**
(45) Date of publication and mention of the grant of the patent: **08.11.2023**
(21) Application number: 17809129.4
(22) Date of filing: 20.11.2017
(51) Int. Cl.: H01Q 1/42, H01Q 1/32

(54) **MULTI-PIECE VEHICLE RADOME HAVING NON-UNIFORM BACK PIECE**
MEHRTEILIGES RADOM MIT UNEINHEITLICHEM RÜCKSEITIGEM TEIL FÜR EIN KRAFTFAHRZEUG
RADÔME DE VÉHICULE À PLUSIEURS PIÈCES À PIÈCE ARRIÈRE NON UNIFORME

(30) Priority: 02.12.2016 US 201615367605
(43) Date of publication of application: 09.10.2019
(73) Proprietor: SRG Global, LLC, Troy, MI 48083 (US)
(72) Inventor: SHURISH, James Michael, Troy Michigan 48083 (US); BRUYNEEL, Nicholas, Troy Michigan 48083 (US)
(74) Representative: Hoyng Rokh Monegier B.V.
(86) International application number: PCT/US2017/062485
(87) International publication number: WO 2018/102167

(56) References cited:
- WO-A1-2016/104561
- WO-A1-2016/104575
- JP-A- 2009 198 192
- US-A1- 2007 109 206
- US-A1- 2008 233 367
- US-A1- 2010 039 346
- US-A1- 2016 111 776

## Description

### CROSS-REFERENCE TO RELATED APPLICATIONS

This application claims priority to U.S. Application Serial No. 15/367,605, filed on December 2, 2016.

### FIELD

The present disclosure generally relates to radomes for vehicles and, more particularly, to a multi-piece vehicle radome having a non-uniform back piece.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

A radar cover or "radome" is a structure or enclosure that protects a radar device (e.g., a radar antenna). For vehicle applications, radar devices can be used for object proximity monitoring, such as in adaptive cruise control systems and other similar systems (e.g., parking assistance systems). In addition to not inhibiting or preventing radar accuracy, vehicle radomes are often visible (e.g., mounted to an external surface of the vehicle) and should therefore also be visually appealing.
US2007109206A1 recites a radar device placed rearward of a vehicle decorative component in a vehicle. The decorative component is located in the path of radar waves emitted from the radar device, and has a two-layer structure with a back layer and a protective layer. The protective layer is made of a transparent resin material, and the back surface of the protective layer contacts the front surface of the back layer. The back layer is made of a resin material. The front surface of the back layer includes a front contact surface on which ground pattern is formed.
WO2016104575A1 recites a radar device comprising a transmission means, a reception means, target detection means, and cover members. The cover members are arranged facing at least either the transmission means or the reception means, so as to cover at least either the transmission means or the reception means.
US2010039346A1 recites an antenna assembly comprises a plurality of antenna elements arranged in an array, and a radome for protecting the antenna elements, wherein the radome has a thickness that changes across a field of view to normalize insertion phase delay differences in an incoming signal passing through the radome and received by the antenna elements.
WO2016104561A1 recites a radar device comprising a transmission means, a reception means, a target detection means, a direction detection means, and cover members. The cover members comprise first surfaces and second surfaces. The first surfaces and the second surfaces are not parallel. In addition, at least either the first surfaces or the second surfaces are formed into curved surfaces that have been curved along the direction-detection direction detected by the direction detection means, such that the phase difference for arriving waves received by a plurality of antenna elements increases.
JP2009198192A recites an emblem is attached to a vehicle on a progression route of radar wave transmitted from the antenna of an on-vehicle radar device, and transmits the radar wave. The emblem includes an emblem body having a predetermined design shape, and a correcting tool that is made of dielectric material.
US2016111776A1 recites a radio wave transmissive cover is arranged in a path of a radio wave of a millimeter wave radar device. The cover includes a transparent member, which serves as the surface of the cover, and an ornamental layer, which is formed on the rear surface of the transparent member.
US2008233367A1 recites a radio wave transmission cover, which is provided in front of a radar device for vehicles, and a method of manufacturing the radio wave transmission cover.

### SUMMARY

While the invention is defined in the independent claims, further aspects of the invention are set forth in the dependent claims, the drawings and the following description.

Further areas of applicability of the present disclosure will become apparent from the detailed description provided hereinafter. It should be understood that the detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings, wherein:
FIG. 1 depicts a plot of example transverse electric (TE) and transverse magnetic (TM) radar attenuation through a radome having a uniform thickness according to some implementations of the present disclosure;
FIG. 2A depicts a cross-sectional view of a non-uniform single piece vehicle radome
FIGS. 2B-2C depict plots of an example non-uniform thickness profile and example radar attenuation for the radome of FIG. 2A;
FIG. 3A-3B depict cross-sectional views of an example two-piece vehicle radomes defining a decorative feature and a non-uniform back piece according to some implementations of the present disclosure;
FIG. 3B-3C depicts a cross-sectional view of an example three-piece vehicle radome defining a decorative feature and a non-uniform back piece according to some implementations of the present disclosure; and
FIG. 4 is a flow diagram of a method for manufacturing a multi-piece vehicle radome having a non-uniform back piece according to some implementations of the present disclosure.

### DETAILED DESCRIPTION

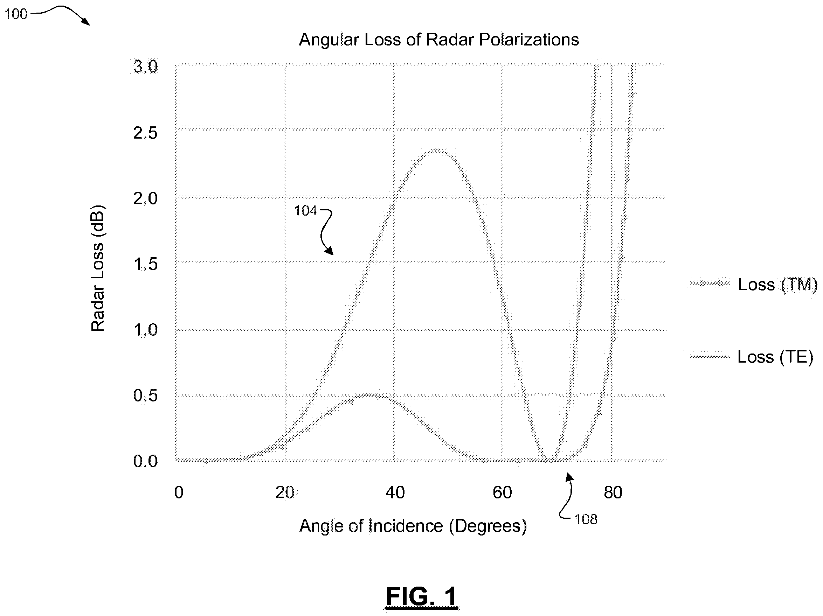

Conventional automotive radomes are typically designed to have a uniform thickness. This uniform thickness can decrease electromagnetic signal attenuation (also known as "radar loss" or "angular loss"), while also making the radome relatively easy to design and manufacture. For large scanning angles by the radar device (e.g., +/- ~90 degrees, or ∼180 total degrees), these conventional, uniform thickness radomes still suffer from large radar loss, particularly at larger scanning angles corresponding to large angles of incidence. The term "scanning angle" as used herein refers to a positive or negative angle with respect to dead center with respect to the radar device (e.g., 0 degrees). The term "angle of incidence" herein refers to the angle between an electromagnetic wave incident on a surface and a line perpendicular to the surface at the point of incidence. As shown in plot 100 of FIG. 1, TE polarization suffers from a dramatic performance loss at only +/- 30 degrees for the angle of incidence (see reference 104). After reaching Brewster's angle (see reference 108), radar loss for both TE and TM then proceeds to infinite loss.

A small scanning range (e.g., less than +/- 30 degrees) may be acceptable for certain applications, such as adaptive cruise control where only a vehicle directly in front of the radar device is being scanned for. Larger scanning ranges, however, may be required for other applications. One non-limiting example of an application that would require larger scanning angles is an autonomous vehicle or a vehicle having an autonomous driving mode. It will be appreciated, however, that there may be many other applications, such as any active safety feature of a vehicle (object proximity detection, collision avoidance, active cruise control, parking assistance, etc.). These types of vehicles or vehicle systems may require the ability to accurately scan across a much larger scanning range (e.g., +/- ~90 degrees, or ∼180 degrees). As mentioned above, larger scanning angles typically correspond to larger angles of incidence for the radome, which affects system performance. Additionally, the appealing visual appearance of the radome needs to remain the same, i.e., if a portion of the radome was to be modified. Therefore, there is a need for multi-piece radomes that are both visually appealing while also providing for an increased scanning range by a radar device.

Accordingly, improved multi-piece radomes having a non-uniform back piece and methods of their manufacture are presented. One or more cover/intermediary pieces are also provided on top of or in front of the back piece. The one or more cover/intermediary pieces, however, can have a uniform thickness when together, particularly when formed of the same material. The visual appearance of any decorative features applied to the cover/intermediary piece(s) or designed therein and therebetween can thus be maintained. In other words, these decorative features are still clearly visible to a user as intended by the designer, but the non-uniform back piece can provide for decreased/eliminated electromagnetic signal attenuation. The thickness of the one or more cover/intermediary pieces can be a factor in designing the specific thickness profile and/or curvature of the back piece. The orientation or positioning of a radar device with respect to the radome can also be a factor in the thickness design, or vice-versa.

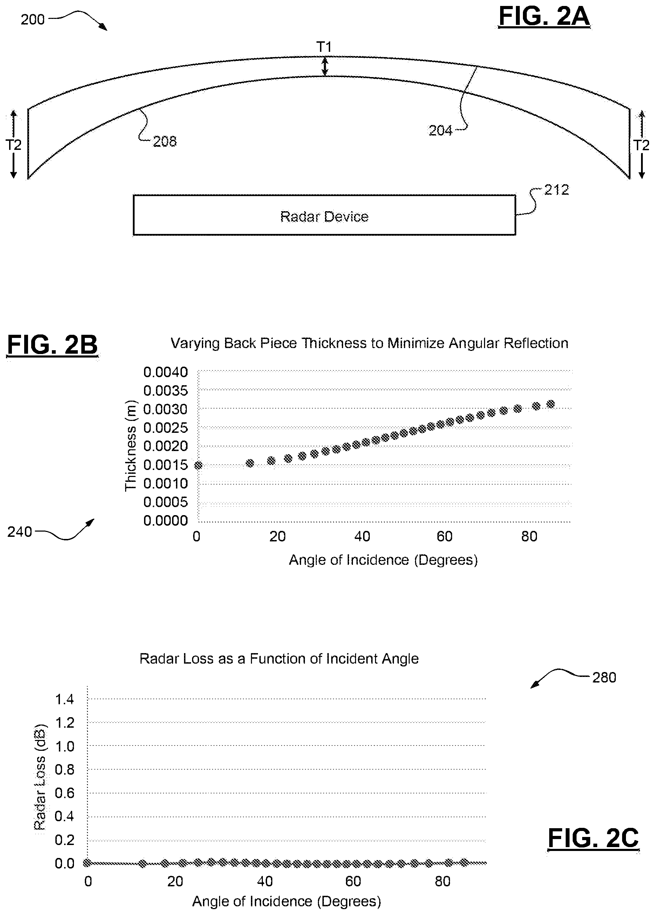

Referring now to FIG. 2A, a cross-sectional view of an example one-piece radome 200 is illustrated. While only comprising one piece, it will be appreciated that the radome 200 can be described as comprising a single, non-uniform back piece. As shown, a thickness T1 towards a center of the radome 200 is less than a thickness T2 towards outer edges of the radome 200. As such, a curvature of a front surface 204 of the radome 200 differs from (is less than or less severe than) a curvature of a back surface 208 of the radome 200. FIG. 2B illustrates a plot 240 of an example non-uniform thickness profile for a one-piece radome (e.g., radome 200). As shown, the thickness varies from approximately 1.5 millimeters (mm), or 0.0015 meters (m), at an angle of incidence of 0 degrees to approximately 3.0 mm, or 0.003 m, at an angle of incidence of 90 degrees. For example, in FIG. 2B, T1 may be 1.5 mm and T2 may be 3.0 mm. As can be seen in plot 280 of FIG. 2C, the radar loss (in decibels, or dB) by radar device 212 is approximately zero across the entire range of +/- 90 degrees for the angle of incidence.

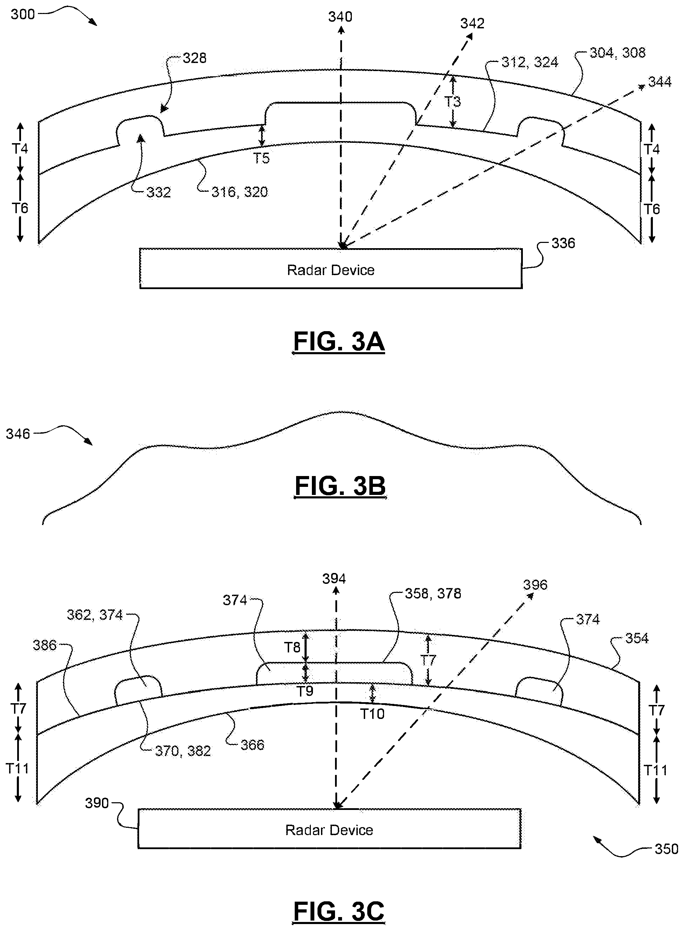

A one-piece radome (e.g., radome 200), however, does not provide for optimal visual effects, which is desirable particularly for most vehicle applications. Specifically, the features for a one-piece radome may be limited to two-dimensional features such as a thin layer of film or paint. Therefore, a multi-piece radome is more desirable due to the more complex decorative features that can be formed. Multiple pieces, however, can create a complex problem for mitigating radar attenuation. Referring now to FIG. 3A, an example two-piece radome 300 is illustrated. The radome 300 includes a front or cover piece 304 that defines a front surface 308 and a back surface 312 and a back piece 316 that defines a front surface 320 and a back surface 324. As shown, the back surface 312 of the cover piece 304 can define recesses 328 and the front surface 320 of the back piece 316 can define protrusions 332 that correspond to (e.g., are complimentary to) the recesses 328.

The recesses and protrusions 328 and 332 can correspond to three-dimensional portions of the decorative feature (e.g., a vehicle emblem, logo, or symbol). While the recesses and protrusions 328 and 332 affect the thickness of the cover piece 304 and the back piece 316 in certain areas, a thickness T3 towards a center of the cover piece 304 can be approximately equal to a thickness T4 towards outer edges of the cover piece 304. In some implementations, the cover piece 304 can define a uniform thickness (i.e., T3=T4), but only if not accounting for the recesses 328. The back piece 316, on the other hand, can define a non-uniform thickness profile. More particularly, a thickness T5 towards a center of the back piece 316 can be less than a thickness T6 towards outer edges of the back piece 316. This non-uniform thickness of the back piece 316 mitigates radar attenuation.

One potential issue with the two-piece design of radome 300, however, is material and thickness variability across the scanning range. More particularly, when the cover piece 304 is formed of a material that has different permittivity properties than the back piece 316, the recesses and protrusions 328 and 332 can affect the radar attenuation, if not accounted for. As shown at 340, at a radar angle of approximately 0 degrees, the radar device 336 scans through a larger/thicker portion of the back piece 316 due to the recess 328. As shown at 342, on the other hand, at a radar angle of approximately 15 degrees, the radar device 336 scans through a larger/thicker portion of the cover piece 304. Similarly, as shown at 344, at a radar angle of approximately 30 degrees, the radar device 336 may scan through a side portion of the recess 328, which may be an even different thickness portion of the back piece 316 (compared to the scan denoted by 340).

To account for this potential material and thickness difference, instead of a linearly increasing curvature from center, according to the invention the back piece 316 has a non-linear changing curvature from center An example of such a non-linear changing curvature is shown as 346 in FIG. 3B. This non-linear changing thickness profile 346 would replace the back surface 320 of back piece 320. These "waves" in the non-linear changing thickness profile 346 would correspond to locations of the recesses and protrusions 328 and 332 in FIG. 3A. The back piece 316 would still define a non-uniform thickness profile, but it would not be the constant changing curvature as shown by back surface 320 in FIG. 3A. In other words, the linear curvature may be described as only increasing in thickness (from center towards the ends), whereas the non-linear curvature may be described as both increasing and decreasing in thickness (from center towards the ends). Design and manufacture of such a back piece, however, is obviously more difficult compared to the single-piece radome 200 of FIG. 2A. Specifically, both determining the correct wavy profile and then manufacturing the back piece 316 would be much more complex, which could increase costs. However, doing so may result in a radome 300 that both defines three-dimensional decorative features as well as mitigates radar attenuation through the use of the non-uniform back piece 316.

Instead of the two-piece radome 300, a multi-piece design having three or more pieces may be preferred. Referring now to FIG. 3C, an example three-piece design of a radome 350 is illustrated. The radome 350 can include a cover piece 354 defining a back surface 358 that defines recesses 362 and a back piece 366 defining a front surface 370. The radome 350 can further include an intermediate or intermediary piece 374 defining front and back surfaces 378, 382 and shaped to correspond to or be complimentary to the recesses 362. The cover piece 354 and the intermediary piece 374 can be collectively referred to as front pieces. The cover piece 354 can define a thickness T7 towards both outer edges and towards a center of the cover piece 354, except for portions corresponding to the recesses 362, where the cover piece 354 can define a lesser thickness T8. A thickness T9 of the intermediary piece 374, however, can correspond to a depth of the recesses 362. In this manner, the intermediary piece 374 can fit into the recesses 362 such that it is substantially flush with the back surface 358 of the cover piece 354.

The sum of thicknesses T8 and T9 therefore equals thickness T7. As such, the cover piece 354 and the intermediary piece 374 collectively define a uniform thickness (T7). The back piece 366, on the other hand, can define a non-uniform thickness profile. A thickness T10 towards a center of the back piece 366 can be less than a thickness T11 towards outer edges of the back piece 366. This non-uniform thickness profile enables the back piece 366 to mitigate radar attenuation. By utilizing the same material having the same permittivity for both the cover piece 354 and the intermediary piece 374, three-dimensional features can be formed without creating a complex radar attenuation problem, such as the potential one discussed above with respect to the two-piece radome 300 of FIG. 3A. One example of the material for the cover piece 354 and/or the intermediary piece 374 is transparent or translucent thermoplastic polymer or polycarbonate (PC). It will be appreciated, however, that other suitable resins could be utilized, as well as different resins for the cover and intermediary pieces 354, 374 (e.g., different resins, but having the same permittivity). For example, the cover piece 354 could be a transparent or translucent resin and the intermediary piece 374 could be a non-transparent resin, either the same as or different than the back piece 366. The cover piece 354 and the intermediary piece 374 could also be formed of different transparent or translucent resins (e.g., the cover piece 354 could be a transparent resin and the intermediary piece 374 could be a translucent resin). The cover and/or intermediary pieces 354, 374 could also be formed of a colored, non-transparent resin. Because the thickness of the front pieces is uniform and they are formed of the same material, attenuation for radar device 390 is minimized and constant across the scanning range, e.g., the same at approximately zero degrees (see 394) and approximately 30 degrees (see 396) or any other angle.

The radome 350 can further include a decorative layer 386 disposed between the cover piece 354 and the back piece 366. Example surfaces that the decorative layer 386 can be applied to include, but are not limited to, the back surface 358 of the cover piece 354, the front surface 378 of the intermediary piece 374, the front surface 370 of the back piece 366, and combinations thereof (e.g., both the back surface 358 of the cover piece 354 and the front surface 378 of the intermediary piece 374). As previously mentioned, the shape of the intermediary piece 374, which corresponds to the recesses 362, can define a portion of a decorative feature, such as a symbol for display on the vehicle (an emblem, a logo, a decal, a nameplate, etc.). Another portion of this decorative feature is the optional decorative layer 386. Non-limiting examples of the decorative layer 386 include paint (spray, silk screen, etc.), a colored or multi-colored film (e.g., applied via hot stamping), a single or multi-colored graphic (e.g., applied via an adhesive), and combinations thereof.

Another example of the decorative layer 386 or a portion thereof is a metalloid layer. This metalloid, for example, can be applied via any suitable physical vapor deposition (PVD) technique. Non-limiting examples of PVD techniques include cathodic arc deposition, electron beam PVD, evaporative deposition, pulsed laser deposition, and sputter deposition. This metalloid, however, is not a metal. The metalloid can comprise silicon and, in some implementations, other materials (dopants, germanium, etc.). The metalloid can also be non-silicon-based. Because the metalloid can include other components (e.g., as a result of the PVD process), it can be referred to as a metalloid-based layer. In some implementations, the metalloid can include three total layers: a painted base layer, the deposited metalloid, and a top coat. Tinting, for example, could be added to either the painted base layer or the top coat in order to adjust the color of the intermediary piece 374. It will also be appreciated that the decorative layer 386 can alternatively or additionally include one or more metals. Non-limiting examples of the metal(s) include post-transition metals, such as indium and tin.

When applied to the intermediary piece 174, the metalloid may not appear metallic. Instead, the metalloid will appear as a tinting to the intermediary piece 374 (e.g., similar to window tinting). The metalloid can also define different colors. In one implementation, the deposited metalloid portion of the metalloid could be deposited such that it defines a particular thickness in order to appear vary the color and/or brightness/darkness of the metalloid. When arranged proximate/in front of the back piece 366, the metalloid may appear brighter if the back piece 366 is formed of a non-transparent resin, such as acrylonitrile styrene acrylate (ASA) and acrylonitrile butadiene styrene (ABS) plastics. It will be appreciated, however, that other non-transparent plastics could be utilized, as well as transparent plastics (e.g., which could also then be painted or otherwise masked to be translucent or non-transparent). In other words, while the metalloid may not itself appear metallic, it may appear metallic when placed in proximity to a non-transparent version of the back piece 366.

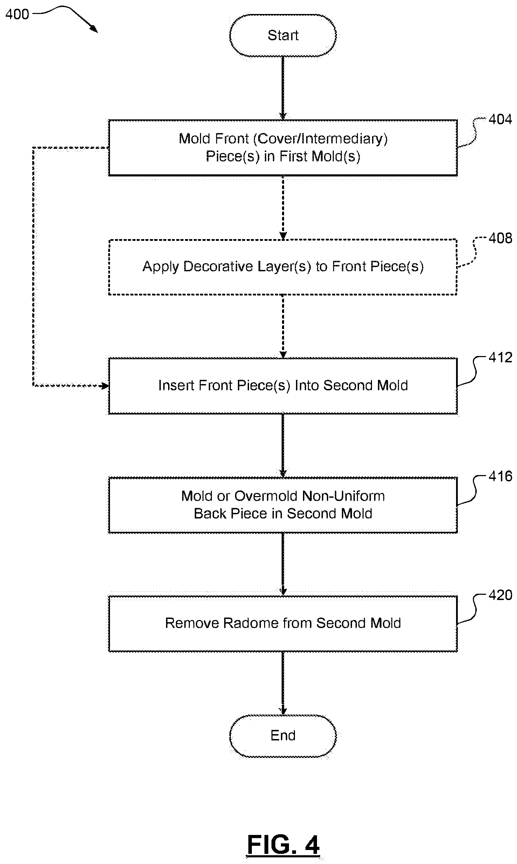

Referring now to FIG. 4, a method 400 for manufacturing a multi-piece vehicle radome having a non-uniform back piece is illustrated. At 404, one or more front pieces are formed using one or more first molds, e.g., via injection molding. The material for the molding can be, for example, a transparent or translucent resin, such as PC. In some implementations, separate cover and intermediary pieces can be formed in distinct first molds. In other implementations, the cover and intermediary pieces can be formed using the first mold(s) (e.g., a single mold or a family mold) using a multi-shot injection molding process. At optional 408, the decorative layer(s) are applied. As previously discussed, non-limiting examples of these decorative layer(s) include a metalloid, paint, a single or multi-colored film, and a single-or multi-colored graphic. At 412, the front piece(s) are removed from the first mold(s) and inserted into a different second mold. At 416, the back piece is formed from a non-transparent resin (e.g., ABS) using the second mold, e.g., via injection molding. This step 416, in some implementations, could be the second or third shot of a multi-shot injection molding process.

In some implementations, the back piece could be overmolded (i.e., over an outer edge of the front piece(s)) to secure the radome together. Alternatively, an adhesive could be utilized. The pieces could also be held together via chemical bonding (e.g., as a result of the heat generated during the molding processes). In some implementations, the back piece can further define a mounting feature configured to attach the radome to a portion (e.g., a front end) of the vehicle. Such a mounting feature, however, should not be in a viewing or scanning path of the corresponding radar device. Because the cover/intermediary pieces are complimentary and thus can be mated together, a subsequent molding step to form the radome does not require these components to be specifically aligned or held proximate to each other. This simplifies and could potentially reduce costs of the second/final molding process. At 420, the radome can then be removed from the second mold. The radome will thus include the front piece(s), the non-uniform back piece, and some sort of decorative feature (recess/protrusion, one or more decorative layers, or some combination thereof). The method 400 can then end or return to 404 to form another radome.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known procedures, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The term "and/or" includes any and all combinations of one or more of the associated listed items. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments. Similarly, method or flowchart steps do not necessarily imply an order of operations (e.g., a step recited after another step could be performed before the other step, unless required as being performed after).

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure as long as they fall within the scope of the appended claims.

## Claims

1. A multi-piece radome (300) for a vehicle, the radome comprising:
one or more front pieces (304, 354, 374) formed of at least a first resin and collectively defining a decorative feature; and
a back piece (316) formed of a non-transparent second resin and defining a specific non-uniform thickness for mitigating electromagnetic attenuation through the radome (300) with respect to a radar device;
the one or more front pieces (304, 354, 374) comprise a single cover piece (304) defining a back surface (312) that defines a set of recesses (328); and
the back piece (316, 366) defines a front surface that defines a set of protrusions (332) that correspond to the set of recesses (328), wherein the sets of recesses (328) and protrusions (332) form a portion of the decorative feature; **characterized in that** the back piece (316) has a center thickness that is less than a thickness towards the outer edges, and the back piece (316) defines a back surface (320) defining a non-linear changing curvature from the center towards the outer edges.

2. A multi-piece radome (300) for a vehicle, the radome comprising:
one or more front pieces (304, 354, 374) formed of at least a first resin and collectively defining a decorative feature; and
a back piece (366) formed of a non-transparent second resin and defining a specific non-uniform thickness for mitigating electromagnetic attenuation through the radome (300) with respect to a radar device; wherein the one or more front pieces comprise:
a cover piece formed of a transparent or translucent first resin and defining a back surface that defines one of a recess and a protrusion; and
an intermediary piece defining a front surface that defines the other of the recess and the protrusion,
wherein the recess and the protrusion collectively form a first portion of the decorative feature; **characterized in that** the back piece (366) has a center thickness that is less than a thickness towards the outer edges, and the backpiece (366) defines a back surface (320) defining a non-linear changing curvature from the center towards the outer edges.

3. The radome of claim 2, wherein the intermediary piece is also formed of the transparent or translucent first resin, and wherein the cover piece and the intermediary piece collectively define a uniform thickness.

4. The radome of claim 2, further comprising a decorative layer applied to at least one of the back surface of the cover piece and the front surface of the intermediary piece, wherein the decorative layer forms a second portion of the decorative feature.

5. The radome of claim 4, wherein the decorative layer comprises at least one of a metalloid applied via physical vapor deposition (PVD), paint, a single or multi-colored film, and a single or multi-colored graphic.

6. The radome of claim 1, wherein a particular first resin used to form the single cover piece is different than the non-transparent second resin, and
wherein the back piece defines a back surface that defines a non-linear curvature that defines waves corresponding to the recesses/protrusions.

7. The radome of claim 2, wherein the specific non-uniform thickness of the back piece is based on at least one of (i) a collective thickness of the cover and intermediary pieces and (ii) a position of a radar device with respect to the radome.

8. A system for the vehicle, the system comprising:
the radome of claim 7; and
a radar device arranged at the position with respect to the back piece,
the radar device being configured to transmit/receive electromagnetic signals through the radome,
wherein at least one of (i) the vehicle has an active safety feature and the vehicle is configured to utilize the system for performing the active safety feature and (ii) the vehicle is an autonomous vehicle or the vehicle has an autonomous driving mode and the vehicle is configured to utilize the system for autonomous driving.

9. A method for manufacturing a multi-piece radome for a vehicle, the method comprising:
molding, using one or more first molds, at least a first resin to form one or more front pieces that collectively define a decorative feature;
inserting the one or more front pieces into a second mold;
molding, using the second mold, a non-transparent second resin to form a back piece; and
removing the radome from the second mold;
wherein the one or more front pieces comprise a single cover piece defining a back surface that defines a set of recesses; and
the back piece defines a front surface that defines a set of protrusions that correspond to the set of recesses, wherein the sets of recesses and protrusions form a portion of the decorative feature **characterized in that** the backpiece (316) has a center thickness that is less than thickness towards the outer edges, and the back piece (316) defines a back surface (320) defining a non-linear changing curvature from the center towards the outer edges.

10. A method for manufacturing a multi-piece radome for a vehicle, the method comprising:
molding, using one or more first molds, at least a first resin to form one or more front pieces that collectively define a decorative feature;
inserting the one or more front pieces into a second mold;
molding, using the second mold, a non-transparent second resin to form a back piece; and
removing the radome from the second mold;
wherein the one or more front pieces comprise:
a cover piece formed of a transparent or translucent first resin and defining a back surface that defines one of a recess and a protrusion; and
an intermediary piece defining a front surface that defines the other of the recess and the protrusion,
wherein the recess and the protrusion form collectively form a first portion of the decorative feature; **characterized in that** the back piece (366) has a center thickness that is less than a thickness towards the outer edges, and the backpiece (366) defines a back surface (320) defining a non-linear changing curvature from the center towards the outer edges.

11. The method of claim 10, wherein the intermediary piece is also formed of the transparent or translucent first resin, and wherein the cover piece and the intermediary piece collectively define a uniform thickness.

12. The method of claim 10, further comprising applying a decorative layer to at least one of the back surface of the cover piece and the front surface of the intermediary piece, wherein the decorative layer forms a second portion of the decorative feature.

13. The method of claim 12, wherein the decorative layer comprises at least one of a metalloid applied via physical vapor deposition (PVD), paint, a single or multi-colored film, and a single or multi-colored graphic.

14. The method of claim 9, wherein a particular first resin used to form the single cover piece is different than the non-transparent second resin, and wherein the back piece defines a back surface that defines a non-linear curvature that defines waves corresponding to the recesses/protrusions.

15. The method of claim 10, wherein the specific non-uniform thickness of the back piece is based on at least one of (i) a collective thickness of the cover and intermediary pieces and (ii) a position of a radar device with respect to the radome.

16. The method of claim 15, wherein (i) the vehicle has an active safety feature and the vehicle is configured to utilize the radar device and the radome for performing the active safety feature or (ii) the vehicle is an autonomous vehicle or the vehicle has an autonomous driving mode and the vehicle is configured to utilize the radar device and the radome for autonomous driving.

## Patentansprüche

1. Mehrteiliges Radom (300) für ein Fahrzeug, wobei das Radom umfasst:
ein oder mehrere Frontteile (304, 354, 374), die aus mindestens einem ersten Harz gebildet sind und kollektiv ein dekoratives Merkmal definieren; und
ein Rückseitenteil (316), das aus einem nicht-transparenten zweiten Harz gebildet ist und eine spezifische nicht gleichmäßige Dicke zum Mindern elektromagnetischer Dämpfung durch das Radom (300) hindurch in Bezug auf eine Radarvorrichtung definiert;
wobei das eine oder die mehreren Frontteile (304, 354, 374) ein einziges Abdeckteil (304) umfassen, das eine Rückseitenoberfläche (312) definiert, die einen Satz von Vertiefungen (328) definiert; und
das Rückseitenteil (316, 366) eine Frontoberfläche definiert, die einen Satz von Vorsprüngen (332) definiert, die dem Satz von Vertiefungen (328) entsprechen, wobei die Sätze von Vertiefungen (328) und Vorsprüngen (332) einen Abschnitt des dekorativen Merkmals bilden; **dadurch gekennzeichnet, dass** das Rückseitenteil (316) eine Mittendicke aufweist, die kleiner ist als eine Dicke in Richtung der Außenkanten, und das Rückseitenteil (316) eine Rückseitenoberfläche (320) definiert, die eine sich nicht linear ändernde Krümmung von der Mitte in Richtung der Außenkanten definiert.

2. Mehrteiliges Radom (300) für ein Fahrzeug, wobei das Radom umfasst:
ein oder mehrere Frontteile (304, 354, 374), die aus mindestens einem ersten Harz gebildet sind und kollektiv ein dekoratives Merkmal definieren; und
ein Rückseitenteil (366), das aus einem nicht-transparenten zweiten Harz gebildet ist und eine spezifische nicht gleichmäßige Dicke zum Mindern elektromagnetischer Dämpfung durch das Radom (300) hindurch in Bezug auf eine Radarvorrichtung definiert; wobei das eine oder die mehreren Frontteile Folgendes umfassen:
ein Abdeckteil, das aus einem transparenten oder durchscheinenden ersten Harz gebildet ist und eine Rückseitenoberfläche definiert, die eines einer Vertiefung und eines Vorsprungs definiert; und
ein Zwischenteil, das eine Frontoberfläche definiert, die das andere der Vertiefung und des Vorsprungs definiert,
wobei die Vertiefung und der Vorsprung kollektiv einen ersten Abschnitt eines dekorativen Merkmals bilden; **dadurch gekennzeichnet, dass** das Rückseitenteil (366) eine Mittendicke aufweist, die kleiner ist als eine Dicke in Richtung der Außenkanten, und das Rückseitenteil (366) eine Rückseitenoberfläche (320) definiert, die eine sich nicht linear ändernde Krümmung von der Mitte in Richtung der Außenkanten definiert.

3. Radom nach Anspruch 2, wobei das Zwischenteil auch aus dem transparenten oder durchscheinenden ersten Harz gebildet ist, und wobei das Abdeckteil und das Zwischenteil kollektiv eine gleichmäßige Dicke bilden.

4. Radom nach Anspruch 2, das ferner eine dekorative Schicht umfasst, die an mindestens einer der Rückseitenoberfläche des Abdeckteils und der Frontoberfläche des Zwischenteils aufgebracht ist, wobei die dekorative Schicht einen zweiten Abschnitt des dekorativen Merkmals bildet.

5. Radom nach Anspruch 4, wobei die dekorative Schicht mindestens eines eines Metalloids, das durch physikalische Gasphasenabscheidung (PVD) aufgebracht ist, eines Anstrichs, einer ein- oder mehrfarbigen Folie und einer ein- oder mehrfarbigen Grafik umfasst.

6. Radom nach Anspruch 1, wobei ein besonderes erstes Harz, das verwendet wird, um den das einzige Abdeckteil zu bilden, von dem nicht transparenten zweiten Harz unterschiedlich ist, und
wobei das Rückseitenteil eine Rückseitenoberfläche definiert, die eine nichtlineare Krümmung definiert, die Wellen definiert, die den Vertiefungen/Vorsprüngen entsprechen.

7. Radom nach Anspruch 2, wobei die spezifische nicht gleichmäßige Dicke des Rückseitenteils auf mindestens einem von (i) einer kollektiven Dicke der Abdeckung und Zwischenteilen und (ii) einer Position einer Radarvorrichtung in Bezug zu dem Radom basiert.

8. System für die Fahrzeug, wobei das System umfasst:
das Radom nach Anspruch 7; und
eine Radarvorrichtung, die an der Position in Bezug zu dem Rückseitenteil eingerichtet ist,
wobei die Radarvorrichtung dazu konfiguriert ist, elektromagnetische Signale durch das Radom hindurch zu übertragen/empfangen,
wobei mindestens eines (i) des Fahrzeugs ein aktives Sicherheitsmerkmal aufweist, und das Fahrzeug dazu konfiguriert ist, das System zum Durchführen des aktiven Sicherheitsmerkmals einzusetzen, und (ii) das Fahrzeug ein autonomes Fahrzeug ist oder das Fahrzeug einen autonomen Fahrmodus aufweist, und das Fahrzeug dazu konfiguriert ist, das System zum autonomen Fahren einzusetzen.

9. Verfahren zum Herstellen eines mehrteiligen Radoms für ein Fahrzeug, wobei das Verfahren Folgendes umfasst:
Formen, unter Verwendung einer oder mehrerer erster Formen, mindestens eines ersten Harzes, um ein oder mehrere Frontteile, die kollektiv ein dekoratives Merkmal bilden, zu formen;
Einsetzen des einen oder der mehreren Frontteile in eine zweite Form;
Formen unter Verwendung der zweiten Form eines nicht transparenten zweiten Harzes, um ein Rückseitenteil zu bilden; und
Entfernen des Radoms aus der zweiten Form;
wobei das eine oder die mehreren Frontteile ein einziges Abdeckteil umfassen, das eine Rückseitenoberfläche definiert, die einen Satz von Vertiefungen definiert; und
das Rückseitenteil eine Frontoberfläche definiert, die einen Satz von Vorsprüngen definiert, die dem Satz von Vertiefungen entsprechen, wobei die Sätze von Vertiefungen und Vorsprüngen einen Abschnitt des dekorativen Merkmals bilden; **dadurch gekennzeichnet, dass** das Rückseitenteil (316) eine Mittendicke aufweist, die kleiner ist als die Dicke in Richtung der Außenkanten, und das Rückseitenteil (316) eine Rückseitenoberfläche (320) definiert, die eine sich nicht linear ändernde Krümmung von der Mitte in Richtung der Außenkanten definiert.

10. Verfahren zum Herstellen eines mehrteiligen Radoms für ein Fahrzeug, wobei das Verfahren Folgendes umfasst:
Formen, unter Verwendung einer oder mehrerer erster Formen, mindestens eines ersten Harzes, um ein oder mehrere Frontteile, die kollektiv ein dekoratives Merkmal bilden, zu formen;
Einsetzen des einen oder der mehreren Frontteile in eine zweite Form;
Formen unter Verwendung der zweiten Form eines nicht transparenten zweiten Harzes, um ein Rückseitenteil zu bilden; und
Entfernen des Radoms aus der zweiten Form;
wobei das eine oder die mehreren Frontteile Folgendes umfassen:
ein Abdeckteil, das aus einem transparenten oder durchscheinenden ersten Harz gebildet ist und eine Rückseitenoberfläche definiert, die eines einer Vertiefung und eines Vorsprungs definiert; und
ein Zwischenteil, das eine Frontoberfläche definiert, die das andere der Vertiefung und des Vorsprungs definiert,
wobei die Vertiefung und der Vorsprung kollektiv einen ersten Abschnitt eines dekorativen Merkmals bilden; **dadurch gekennzeichnet, dass** das Rückseitenteil (366) eine Mittendicke aufweist, die kleiner ist als eine Dicke in Richtung der Außenkanten, und das Rückseitenteil (366) eine Rückseitenoberfläche (320) definiert, die eine sich nicht linear ändernde Krümmung von der Mitte in Richtung der Außenkanten definiert.

11. Verfahren nach Anspruch 10, wobei das Zwischenteil auch aus dem transparenten oder durchscheinenden ersten Harz gebildet ist, und wobei das Abdeckteil und das Zwischenteil kollektiv eine gleichmäßige Dicke bilden.

12. Verfahren nach Anspruch 10, das ferner eine dekorative Schicht umfasst, die an mindestens einer der Rückseitenoberfläche des Abdeckteils und der Frontoberfläche des Zwischenteils aufgebracht ist, wobei die dekorative Schicht einen zweiten Abschnitt des dekorativen Merkmals bildet.

13. Verfahren nach Anspruch 12, wobei die dekorative Schicht mindestens eines eines Metalloids, das durch physikalische Gasphasenabscheidung (PVD) aufgebracht ist, eines Anstrichs, einer ein- oder mehrfarbigen Folie und einer ein- oder mehrfarbigen Grafik umfasst.

14. Verfahren nach Anspruch 9, wobei ein besonderes erstes Harz, das verwendet wird, um das einzige Abdeckteil zu bilden, von dem nicht transparenten zweiten Harz unterschiedlich ist, und wobei das Rückseitenteil eine Rückseitenoberfläche definiert, die eine nichtlineare Krümmung definiert, die Wellen definiert, die den Vertiefungen/Vorsprüngen entsprechen.

15. Verfahren nach Anspruch 10, wobei die spezifische nicht gleichmäßige Dicke des Rückseitenteils auf mindestens einem von (i) einer kollektiven Dicke der Abdeckung und Zwischenteile und (ii) einer Position einer Radarvorrichtung in Bezug zu dem Radom basiert.

16. Verfahren nach Anspruch 15, wobei (i) das Fahrzeug ein aktives Sicherheitsmerkmal aufweist, und das Fahrzeug dazu konfiguriert ist, die Radarvorrichtung und das Radom zum Durchführen des aktiven Sicherheitsmerkmals einzusetzen, oder (ii) das Fahrzeug ein autonomes Fahrzeug ist, oder das Fahrzeug einen autonomen Fahrmodus aufweist, und das Fahrzeug dazu konfiguriert ist, die Radarvorrichtung und das Radom zum autonomen Fahren einzusetzen.

## Revendications

1. Radôme à plusieurs pièces (300) pour un véhicule, le radôme comprenant :
une ou plusieurs pièces avant (304, 354, 374) formées d'au moins une première résine et définissant collectivement un élément décoratif ; et
une pièce arrière (316) formée d'une seconde résine non transparente et définissant une épaisseur spécifique non uniforme pour limiter l'atténuation électromagnétique à travers le radôme (300) par rapport à un dispositif radar ;
la ou les plusieurs pièces avant (304, 354, 374) comprennent une seule pièce de couverture (304) définissant une surface arrière (312) qui définit un ensemble d'évidements (328) ; et
la pièce arrière (316, 366) définit une surface avant qui définit un ensemble de saillies (332) qui correspondent à l'ensemble d'évidements (328), dans lequel les ensembles d'évidements (328) et de saillies (332) forment une portion de l'élément décoratif ; **caractérisé en ce que** la pièce arrière (316) présente une épaisseur centrale qui est inférieure à une épaisseur vers les bords extérieurs, et la pièce arrière (316) définit une surface arrière (320) définissant une courbure changeant de manière non linéaire depuis le centre vers les bords extérieurs.

2. Radôme à plusieurs pièces (300) pour un véhicule, le radôme comprenant :
une ou plusieurs pièces avant (304, 354, 374) formées d'au moins une première résine et définissant collectivement un élément décoratif ; et
une pièce arrière (366) formée d'une seconde résine non transparente et définissant une épaisseur spécifique non uniforme pour limiter l'atténuation électromagnétique à travers le radôme (300) par rapport à un dispositif radar ; dans lequel la ou les plusieurs pièces avant comprennent :
une pièce de couverture formée d'une première résine transparente ou translucide et définissant une surface arrière qui définit l'un d'un évidement et d'une saillie ; et
une pièce intermédiaire définissant une surface avant qui définit l'autre de l'évidement et de la saillie,
dans lequel l'évidement et la saillie forment collectivement une première portion de l'élément décoratif ; **caractérisé en ce que** la pièce arrière (366) présente une épaisseur centrale qui est inférieure à une épaisseur vers les bords extérieurs, et la pièce arrière (366) définit une surface arrière (320) définissant une courbure changeant de manière non linéaire depuis le centre vers les bords extérieurs.

3. Radôme selon la revendication 2, dans lequel la pièce intermédiaire est également formée de la première résine transparente ou translucide, et dans lequel la pièce de couverture et la pièce intermédiaire définissent collectivement une épaisseur uniforme.

4. Radôme selon la revendication 2, comprenant en outre une couche décorative appliquée à au moins une des surfaces arrière de la pièce de couverture et avant de la pièce intermédiaire, dans lequel la couche décorative forme une seconde portion de l'élément décoratif.

5. Radôme selon la revendication 4, dans lequel la couche décorative comprend au moins l'un d'un métalloïde appliqué par dépôt physique en phase vapeur (PVD), de peinture, d'un film monochrome ou polychrome, et d'un graphique monochrome ou polychrome.

6. Radôme selon la revendication 1, dans lequel une première résine particulière utilisée pour former la pièce de couverture unique est différente de la seconde résine non transparente, et
dans lequel la pièce arrière définit une surface arrière qui définit une courbure non linéaire qui définit des ondulations correspondant aux évidements/saillies.

7. Radôme selon la revendication 2, dans lequel l'épaisseur spécifique non uniforme de la pièce arrière est basée sur au moins l'une : (i) d'une épaisseur collective des pièces de couverture et intermédiaire et (ii) d'une position d'un dispositif radar par rapport au radôme.

8. Système pour le véhicule, le système comprenant :
le radôme selon la revendication 7 ; et
un dispositif radar agencé au niveau de la position par rapport à la pièce arrière,
le dispositif radar étant configuré pour transmettre/recevoir des signaux électromagnétiques à travers le radôme,
dans lequel au moins l'un (i) du véhicule possède une fonction de sécurité active et le véhicule est configuré pour utiliser le système pour effectuer la fonction de sécurité active et (ii) du véhicule est un véhicule autonome ou le véhicule possède un mode de conduite autonome et le véhicule est configuré pour utiliser le système pour la conduite autonome.

9. Procédé de fabrication d'un radôme à plusieurs pièces pour un véhicule, le procédé comprenant :
le moulage, à l'aide d'un ou de plusieurs premiers moules, d'au moins une première résine pour former une ou plusieurs pièces avant qui définissent collectivement un élément décoratif ;
l'insertion de la ou des plusieurs pièces avant dans un second moule ;
le moulage, à l'aide du second moule, d'une seconde résine non transparente pour former une pièce arrière ; et
le retrait du radôme depuis le second moule ;
dans lequel la ou les plusieurs pièces avant comprennent une seule pièce de couverture définissant une surface arrière qui définit un ensemble d'évidements ; et
la pièce arrière définit une surface avant qui définit un ensemble de saillies qui correspondent à l'ensemble d'évidements, dans lequel les ensembles d'évidements et de saillies forment une portion de l'élément décoratif **caractérisé en ce que** la pièce arrière (316) présente une épaisseur centrale qui est inférieure à une épaisseur vers les bords extérieurs, et la pièce arrière (316) définit une surface arrière (320) définissant une courbure changeant de manière non linéaire depuis le centre vers les bords extérieurs.

10. Procédé de fabrication d'un radôme à plusieurs pièces pour un véhicule, le procédé comprenant :
le moulage, à l'aide d'un ou de plusieurs premiers moules, d'au moins une première résine pour former une ou plusieurs pièces avant qui définissent collectivement un élément décoratif ;
l'insertion de la ou des plusieurs pièces avant dans un second moule ;
le moulage, à l'aide du second moule, d'une seconde résine non transparente pour former une pièce arrière ; et
le retrait du radôme depuis le second moule ;
dans lequel la ou les plusieurs pièces avant comprennent :
une pièce de couverture formée d'une première résine transparente ou translucide et définissant une surface arrière qui définit l'un d'un évidement et d'une saillie ; et
une pièce intermédiaire définissant une surface avant qui définit l'autre de l'évidement et de la saillie,
dans lequel l'évidement et la saillie forment collectivement une première portion de l'élément décoratif **caractérisé en ce que** la pièce arrière (366) présente une épaisseur centrale qui est inférieure à une épaisseur vers les bords extérieurs, et la pièce arrière (366) définit une surface arrière (320) définissant une courbure changeant de manière non linéaire depuis le centre vers les bords extérieurs.

11. Procédé selon la revendication 10, dans lequel la pièce intermédiaire est également formée de la première résine transparente ou translucide, et dans lequel la pièce de couverture et la pièce intermédiaire définissent collectivement une épaisseur uniforme.

12. Procédé selon la revendication 10, comprenant en outre l'application d'une couche décorative sur au moins l'une des surfaces arrière de la pièce de couverture et avant de la pièce intermédiaire, dans lequel la couche décorative forme une seconde portion de l'élément décoratif.

13. Procédé selon la revendication 12, dans lequel la couche décorative comprend au moins l'un d'un métalloïde appliqué par dépôt physique en phase vapeur (PVD), de peinture, d'un film monochrome ou polychrome, et d'une graphique monochrome ou polychrome.

14. Procédé selon la revendication 9, dans lequel une première résine particulière utilisée pour former la seule pièce de couverture est différente de la seconde résine non transparente, et dans lequel la pièce arrière définit une surface arrière qui définit une courbure non linéaire qui définit des ondulations correspondant aux évidements/saillies.

15. Procédé selon la revendication 10, dans lequel l'épaisseur spécifique non uniforme de la pièce arrière est basée sur au moins l'une (i) d'une épaisseur collective des pièces de couverture et intermédiaire et (ii) d'une position d'un dispositif radar par rapport au radôme.

16. Procédé selon la revendication 15, dans lequel (i) le véhicule possède une fonction de sécurité active et le véhicule est configuré pour utiliser le dispositif radar et le radôme pour effectuer la fonction de sécurité active ou (ii) le véhicule est un véhicule autonome ou le véhicule possède un mode de conduite autonome et le véhicule est configuré pour utiliser le dispositif radar et le radôme pour la conduite autonome.
